(19) **Europäisches Patentamt / European Patent Office / Office européen des brevets**

(11) **EP 4 215 493 A2**

(12) **EUROPEAN PATENT APPLICATION**

(43) Date of publication:
**26.07.2023 Bulletin 2023/30**

(21) Application number: **23152639.3**

(22) Date of filing: **20.01.2023**

(51) International Patent Classification (IPC):
**C01G 53/00** (2006.01)   **H01M 4/525** (2010.01)

(52) Cooperative Patent Classification (CPC):
**C01G 53/006; C01G 53/44; H01M 4/525;**
C01P 2006/40

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.01.2022 KR 20220008922**

(71) Applicant: **SK On Co., Ltd.**
**Seoul 03161 (KR)**

(72) Inventors:
• **KWEON, Hee Jun**
  **34124 Daejeon (KR)**

• **KIM, Sang Bok**
  **34124 Daejeon (KR)**
• **PARK, Sang Min**
  **34124 Daejeon (KR)**
• **SHIN, Sang Hye**
  **34124 Daejeon (KR)**
• **LEE, Tae Kyoung**
  **34124 Daejeon (KR)**
• **CHOI, Ji Hoon**
  **34124 Daejeon (KR)**

(74) Representative: **Stolmár & Partner**
**Patentanwälte PartG mbB**
**Blumenstraße 17**
**80331 München (DE)**

(54) **CATHODE ACTIVE MATERIAL FOR LITHIUM SECONDARY BATTERY, METHOD OF PREPARING THE SAME AND LITHIUM SECONDARY BATTERY INCLUDING THE SAME**

(57)   A cathode active material for a lithium secondary battery according to an embodiment of the present invention includes a lithium metal oxide particle that contains tungsten and has a secondary shape in which a plurality of primary particles are aggregated. The lithium metal oxide particle includes a sulfur-containing portion formed between the primary particles in an inner region of the lithium metal oxide particle.

EP 4 215 493 A2

**Description**

BACKGROUND

1. Field

The present invention relates to a cathode active material for a lithium secondary battery, a method of preparing the same and a lithium secondary battery including the same. More particularly, the present invention relates to a cathode active material for a lithium secondary battery including a lithium metal oxide particle that contains a doping element, a method of preparing the same and a lithium secondary battery including the same.

2. Description of the Related Art

A secondary battery which can be charged and discharged repeatedly has been widely employed as a power source of a mobile electronic device such as a camcorder, a mobile phone, a laptop computer, etc.
A lithium secondary battery is highlighted due to high operational voltage and energy density per unit weight, a high charging rate, a compact dimension, etc.
For example, the lithium secondary battery may include an electrode assembly including a cathode, an anode and a separation layer, and an electrolyte immersing the electrode assembly.
For example, a cathode slurry including a cathode active material (e.g., lithium metal oxide particles), a binder and a conductive material may be coated on a cathode current collector, and then dried and pressed to obtain a cathode.
For example, the lithium metal oxide particles may include nickel, cobalt, manganese, aluminum, etc.
As an application range of the lithium secondary battery is expanded to large-scaled devices such as an electric vehicle, high-nickel metal oxide particles containing nickel at a high content (e.g., 80 mol% or more of all elements except lithium and oxygen) are developed as a cathode active material to achieve high capacity.
However, the high-nickel lithium metal oxide such as that disclosed in Korean Patent Registration No. 10-0821523 may have relatively low chemical stability.

SUMMARY

According to an aspect of the present invention, there is provided a cathode active material for a lithium secondary battery having improved capacity and chemical stability and a method of preparing the same.
According to an aspect of the present invention, there is provided a lithium secondary battery having improved capacity and chemical stability.
A cathode active material for a lithium secondary battery includes a lithium metal oxide particle that contains tungsten and has a secondary shape in which a plurality of primary particles are aggregated. The lithium metal oxide particle includes a sulfur-containing portion formed between the primary particles in an inner region of the lithium metal oxide particle.
In some embodiments, the lithium metal oxide particle may contain nickel, and tungsten may be doped into the primary particles.
In some embodiments, a content of nickel in the lithium metal oxide particle may be 80 mol% or more based on all elements except lithium and oxygen.
In some embodiments, an amount of sulfur included in the sulfur-containing portion may be greater than an amount of sulfur included in the primary particles.
In some embodiments, a detection count of sulfur in the sulfur-containing portion may be greater than a detection count of sulfur in the primary particles in an energy dispersive X-ray spectroscopy (EDS) analysis of a cross-section of the lithium metal oxide particle.
In some embodiments, an amount of tungsten included in the primary particles may be greater than an amount of tungsten included in the sulfur-containing portion.
In some embodiments, a detection count of tungsten in the primary particles may be greater than a detection count of tungsten in the sulfur-containing portion in an energy dispersive X-ray spectroscopy (EDS) analysis of a cross-section of the lithium metal oxide particle.
In some embodiments, in an energy dispersive X-ray spectroscopy (EDS) analysis of a cross-section of the lithium metal oxide particle, a difference between a maximum detection count of tungsten and an average detection count of tungsten may be 45% or less of the average detection count, and a difference between a minimum detection count of tungsten and the average detection count of tungsten may be 45% or less of the average detection count.
In some embodiments, the primary particles may include a layered crystal structure, and when a radius of the primary particle is designated as Rp, the primary particle may not include a cubic crystal structure in a region within a radius of 0.9Rp from a center of the primary particle.

In some embodiments, the primary particles include a layered crystal structure and do not include a cubic crystal structure.

In some embodiments, when a radius of the lithium metal oxide particle is designated as Rs, the sulfur-containing portion may be present in a region within a radius of 0.6Rs from a center of the lithium metal oxide particle.

In some embodiments, the sulfur-containing portion may be present in a region other than the region within the radius of 0.6Rs.

In some embodiments, when a radius of the lithium metal oxide particle is designated as Rs, tungsten may be present in a region within a radius of 0.6Rs from a center of the lithium metal oxide particle.

In some embodiments, tungsten may be present in a region other than the region within the radius of 0.6Rs.

In a method of preparing a cathode active material for a lithium secondary battery, metal hydroxide particles are prepared. A mixture of the metal hydroxide particles, a lithium source, a tungsten-containing source and a sulfur-containing source is formed. A calcination of the mixture is performed.

In some embodiments, $(NH_4)_2WS_4$ may be used as the tungsten-containing source and the sulfur-containing source.

In some embodiments, in the formation of the mixture, a first mixture may be formed by mixing the metal hydroxide particles and a first lithium source so that a ratio of the number of moles of lithium in the first lithium source relative to the total number of moles of metals in the metal hydroxide particles may become N1, and $0.6 \leq N1 < 1$. In the calcination, a first calcination of the first mixture may be performed to form preliminary lithium metal oxide particles.

In some embodiments, in the formation of the mixture, the preliminary lithium metal oxide particles, a second lithium source, the tungsten-containing source and the sulfur-containing source may be mixed to form a second mixture. In the calcination, a second calcination of the second mixture may be performed to form lithium metal oxide particles having an increased number of moles of lithium compared to that of the preliminary lithium metal oxide particles.

In some embodiments, in the formation of the second mixture, the preliminary lithium metal oxide particles and the second lithium source may be mixed so that a ratio of the number of moles of lithium in the second lithium source relative to the total number of moles of metals excluding lithium in the preliminary lithium metal oxide particles may become N2, and $0 < N2 \leq 0.6$ and $0.9 \leq N1+N2 \leq 1.2$.

In some embodiments, $0.7 \leq N1 \leq 0.9$, $0.1 \leq N2 \leq 0.3$, and $0.9 \leq N1+N2 \leq 1.1$.

A lithium secondary battery includes a cathode including the cathode active material for a lithium secondary battery according to embodiments as described above, and an anode facing the cathode.

A cathode active material for a lithium battery according to embodiments of the present invention may include lithium metal oxide particles that include a plurality of primary particles doped with tungsten, and a sulfur-containing portion formed between the primary particles. For example, the sulfur-containing portion may be formed between the primary particles present within an inner region of the lithium metal oxide particle. Accordingly, the cathode active material for a lithium secondary battery may have more improved chemical stability.

In a method for preparing the cathode active material for a lithium secondary battery according to exemplary embodiments, preliminary lithium metal oxide particles having a molar ratio of lithium to all metals (e.g., Ni, Co, Mn, etc.) of less than 1 may be formed, and then preliminary lithium metal oxide particles and a tungsten-sulfur containing source may be mixed and calcined. Accordingly, tungsten may be doped into the primary particles, and the sulfur-containing portion may be formed between the primary particles. Additionally, a cubic crystal structure may not be formed at an inside of the primary particles.

A lithium secondary battery according to exemplary embodiments includes the cathode active material for the lithium secondary battery, and may have improved life-span and high-temperature storage properties.

BRIEF DESCRIPTION OF THE DRAWINGS

FIG. 1 is a flow diagram schematically illustrating a method of preparing a cathode active material for a lithium secondary battery according to exemplary embodiments.

FIGS. 2 and 3 are a schematic plan view and a schematic cross-sectional view, respectively, illustrating a lithium secondary battery in accordance with exemplary embodiments.

FIG. 4 is an EDS analysis image of a cross-section of lithium metal oxide particles of Example 1 targeting sulfur elements.

FIG. 5 is an EDS analysis image of a cross-section of lithium metal oxide particles of Example 1 targeting tungsten elements.

FIG. 6 is a line-scanning EDS analysis image of a cross-section of lithium metal oxide particles of Example 1 targeting nickel, sulfur and tungsten.

DETAILED DESCRIPTION OF THE EMBODIMENTS

According to embodiments of the present invention, a cathode active material for a lithium secondary battery including lithium metal oxide particles that contains tungsten and sulfur, a method of preparing the same and a lithium secondary battery including the same are provided.

Hereinafter, embodiments of the present invention will be described in detail with reference to examples and the accompanying drawings.

Cathode active material for lithium secondary battery

A cathode active material for a lithium secondary battery (hereinafter, that may be abbreviated as a cathode active material) according to embodiments of the present invention may include a lithium metal oxide particle that has a shape of a secondary particle in which a plurality of primary particles are aggregated, and contains tungsten (W).

The cathode active material may include a plurality of lithium metal oxide particles. For example, an amount of the lithium metal oxide particles based on a total weight of the cathode active material may be 50 weight percent (wt%) or more. Preferably, the amount of the lithium metal oxide particles may be 60 wt% or more, 70 wt% or more, 80 wt% or more, or 90% by weight or more based on the total weight of the cathode active material.

In one embodiment, the cathode active material may substantially consist of the lithium metal oxide particles.

The lithium metal oxide particle may include a sulfur (S)-containing portion formed between the primary particles in an inner region of the lithium metal oxide particle (e.g., an inner region of the secondary particle).

In some embodiments, the sulfur-containing portion may also be formed on a surface of the lithium metal oxide particle (e.g., an outer surface of the secondary particle).

In an embodiment, the lithium metal oxide particle may further contain nickel (Ni). For example, the primary particles may contain nickel.

In some embodiments, the primary particles may further contain at least one of cobalt (Co) and manganese (Mn). In some embodiments, the primary particles may contain nickel, cobalt and manganese.

In some embodiments, the primary particle may further contain Al, Zr, Ti, Cr, B, Mg, Mn, Ba, Si, Y, W, Sr, etc.

In an embodiment, a content of nickel in the primary particles may be 80 mol% or more, 83 mol% or more, 85 mol% or more, 88 mol% or more, 90 mol% or more, 94 mol% or more or 98 mol% or more based on all elements except lithium and oxygen.

In one embodiment, the primary particle may be represented by Chemical Formula 1 below.

$$[\text{Chemical Formula 1}] \qquad Li_xNi_aM1_bM2_cW_dO_y$$

In Chemical Formula 1, M1 and M2 may include at least one of Co, Mn, Al, Zr, Ti, Cr, B, Mg, Mn, Ba, Si, Y and Sr, $0.9 \leq x \leq 1.2$, $1.9 \leq y \leq 2.1$, $0 < a < 1$, $0 \leq b < 1$, $0 \leq c < 1$, $0 < d \leq 0.05$, $0 < a+b+c+d \leq 1$.

In some embodiments, $0.9 \leq x \leq 1.1$ or $0.9 \leq x \leq 1$.

In some embodiments, $0.8 \leq a < 1$, $0.83 \leq a < 1$, $0.85 \leq a < 1$, $0.88 \leq a < 1$, $0.9 \leq a < 1$, $0.94 \leq a < 1$ or $0.98 \leq a < 1$.

In some embodiments, $0 < d \leq 0.025$ or $0 < d \leq 0.01$.

In an embodiment, tungsten may serve as a doping element. For example, tungsten may be doped into the primary particles.

In an embodiment, the primary particles may include a layered crystal structure. For example, the primary particles containing nickel in a high content (e.g., 80 mol% or more) may have an unstable crystal structure. Tungsten may be doped into the primary particles to stabilize the crystal structure of the primary particles.

For example, when the battery is repeatedly charged and discharged, interfaces between the primary particles may be exposed to an electrolyte, and tungsten present in the primary particles may be eluted to an outside. In this case, tungsten may be precipitated on an anode to increase a resistance of the anode and lower an N/P ratio.

The N/P ratio represents a ratio of a total capacity of an anode calculated based on a capacity per weight and an area of the anode to a total capacity of a cathode calculated based on capacity per weight and an area of the cathode, and may represent safety and capacity of the battery.

As described above, the lithium metal oxide particle according to embodiments of the present invention may include the sulfur-containing portion formed between the primary particles. Accordingly, the sulfur-containing portion may cover at least a portion of the surface of the primary particles. Thus, the elution of tungsten may be effectively prevented.

In an embodiment, sulfur may also be contained in the primary particles. In some embodiments, an amount of sulfur included in the sulfur-containing portion may be greater than an amount of sulfur included in the primary particles.

In an embodiment, in an Energy Dispersive X-ray Spectroscopy (EDS) analysis of a cross-section of the lithium metal oxide particle, a count of sulfur detected in the sulfur-containing portion may be greater than a count of sulfur detected from an inside of the primary particles.

In an embodiment, tungsten may also be contained in the sulfur-containing portion. In some embodiments, an amount of tungsten included in the primary particles may be greater than an amount of tungsten included in the sulfur-containing portion.

In an embodiment, in the EDS analysis of the cross-section of the lithium metal oxide particle, a count of tungsten detected from the inside of the primary particles may be greater than a count of tungsten detected in the sulfur-containing portion.

According to the above-described distribution of tungsten and sulfur, more tungsten may be distributed at the inside of the primary particles to stabilize the crystal structure of the primary particles. Additionally, more Sulfur may be distributed between the primary particles to prevent the elution of tungsten.

In an embodiment, tungsten may be distributed throughout an entire area of the lithium metal oxide particle (i.e., the secondary particle). For example, each of the primary particles may contain tungsten.

For example, when a radius of the lithium metal oxide particle is defined as Rs, tungsten may be within a region of 0.9Rs, 0.75Rs, 0.6Rs, 0.5Rs, 0.4Rs, 0.25Rs or 0.1Rs from a center of the lithium metal oxide particle (e.g., in a tungsten detection by the EDS analysis). Further, tungsten may also be present in a region other than the above-mentioned region.

In an embodiment, the sulfur-containing portion may be distributed throughout an entire region of the lithium metal oxide particle (i.e., the secondary particle).

For example, when the radius of the lithium metal oxide particle is defined as Rs, the sulfur-containing portion is within a region of 0.9Rs, 0.75Rs, 0.6Rs, 0.5Rs, 0.4Rs, 0.25Rs or 0.1Rs from a center of the lithium metal oxide particle (e.g., in a sulfur detection by the EDS analysis). Further, the sulfur-containing portion may also be present in a region other than the above-mentioned region.

In an embodiment, tungsten may be distributed throughout an entire area of the primary particle.

For example, when a radius of the primary particle is defined as Rp, tungsten may be present within a region of 0.9Rp, 0.75Rp, 0.6Rp, 0.5Rp, 0.4Rp, 0.25Rp or 0.1 Rp from a center of the primary particle (e.g., in a tungsten detection by the EDS analysis). Further, tungsten may also be present in a region other than the above-mentioned region.

In some embodiments, tungsten may be uniformly distributed throughout an entire area of the primary particle.

In some embodiments, in the EDS analysis of the cross-section of the lithium metal oxide particle, a difference between a maximum detection count (Cmax) and an average detection count (Cavg) of tungsten at the inside the primary particles may be 45% or less of the average detection count (Cavg) (i.e., (Cmax-Cavg)/Cavg $\leq$ 0.45).

In some embodiments, a difference between a minimum detection count (Cmin) and the average detection count (Cavg) of tungsten may be 45% or less of the average detection count (Cavg) (i.e., (Cavg-Cmin)/Cavg $\leq$ 0.45).

In some embodiments, the difference value may be 40% or less, preferably 30% or less, and more preferably 25% or less of the average detection count (avg). Within this range, life-span and high-temperature storage properties of the lithium secondary battery may be further improved.

In an embodiment, the primary particles may not have a cubic crystal structure. The cubic crystal structure may be irreversible to intercalation and deintercalation of lithium, and may deteriorate the life-span properties of the lithium secondary battery. The primary particles may not substantially include the cubic crystal structure, and the lithium secondary battery having improved life-span properties may be provided.

For example, when the radius of the primary particle is defined as Rp, the primary particle may not include a cubic crystal structure in a region within a radius of 0.9Rp, 0.95Rp or 0.98Rp from the center of the particle (e.g., no cubic crystal structure is observed in a HR-TEM measurement).

In an embodiment, the cathode active material for a lithium secondary battery may further include a coating layer formed on at least a portion of the surface of the lithium metal oxide particle. For example, the coating layer may include Al, Ti, Ba, Zr, Si, B, Mg, P, Sr, W, La, etc.

Method of preparing cathode active material for lithium secondary battery

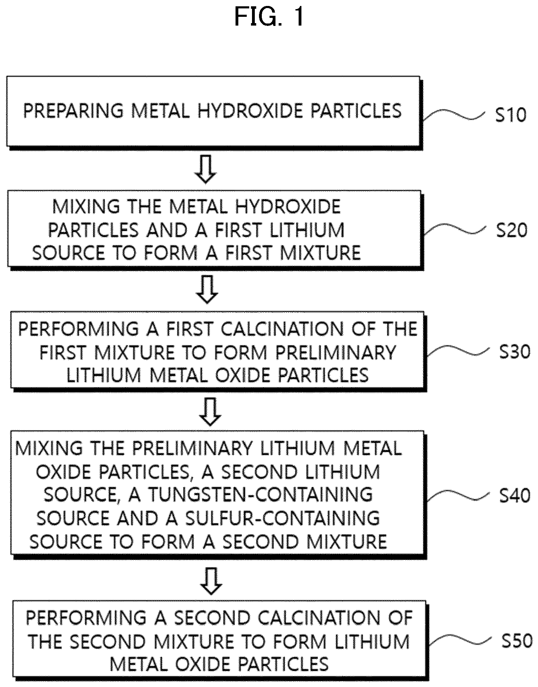

Hereinafter, with reference to FIG. 1, a method of preparing a cathode active material for a lithium secondary battery according to exemplary embodiments will be described.

Referring to FIG. 1, metal hydroxide particles may be prepared (e.g., in an operation of S10).

In an embodiment, the metal hydroxide particles may contain Ni. In some embodiments, the metal hydroxide particle may further contain at least one of Co and Mn.

In some embodiments, the metal hydroxide particles may further contain Al, Zr, Ti, Cr, B, Mg, Mn, Ba, Si, Y, W, Sr, etc.

In an embodiment, a content of nickel in the metal hydroxide particles may be 80 mol% or more, 83 mol% or more, 85 mol% or more, 88 mol% or more, 90 mol% or more, 94 mol% or more, or 98 mol% or more based on all elements except lithium and oxygen.

For example, a reaction solution (e.g., an aqueous solution) containing a metal source, a chelating agent and a co-precipitating agent may be prepared. The metal hydroxide particles may be formed by performing a coprecipitation reaction in the reaction solution.

For example, the metal source may include a metal sulfate, a metal nitrate, a metal acetate, a metal hydroxide, a metal carbonate, a hydrate thereof, etc.

For example, the metal source may include Ni, Co, Mn, Al, Zr, Ti, Cr, B, Mg, Mn, Ba, Si, Y, W, Sr, etc.

For example, a plurality of the metal sources may be prepared to satisfy a metal composition, a molar ratio, etc. described in Chemical Formula 1 above.

In an embodiment, the metal source may include Ni.

In some embodiments, the metal sources may further include at least one of Co and Mn. In some embodiments, the metal sources may include Ni, Co and Mn.

In some embodiments, the metal source may not include W. In some embodiments, W is not provided as a co-precipitation element, but may be provided as a doping element described below.

For example, the co-precipitating agent may include sodium hydroxide, sodium carbonate, etc. For example, the chelating agent may include aqueous ammonia (e.g., $NH_3H_2O$), ammonium carbonate, etc.

For example, a temperature of the co-precipitation reaction may be appropriately adjusted by those ordinarily skilled in the related art without a particular limitation.

A first mixture may be formed by mixing the metal hydroxide particles and a first lithium source (e.g., in an operation of S20).

For example, the first lithium source may include lithium hydroxide, lithium carbonate, lithium nitrate, lithium acetate, lithium oxide, etc.

In an embodiment, the metal hydroxide particles and the first lithium source may be mixed such that a ratio of the number of moles of lithium in the first lithium source relative to a total number of moles of metals in the metal hydroxide particles may become N1 ($0.6 \leq N1 < 1$).

In some embodiments, $0.7 \leq N1 < 1$, $0.7 \leq N1 \leq 0.9$ or $0.75 \leq N1 \leq 0.85$.

A first calcination of the first mixture may be performed to form preliminary lithium metal oxide particles having a ratio of a mole of lithium to moles of all metals (excluding lithium) of less than 1 (e.g., in an operation of S30).

In an embodiment, the first calcination may be performed at a temperature ranging from 720 °C to 850 °C.

In some embodiments, the first calcination temperature may be adjusted according to the concentration of Ni in the metal hydroxide particles. For example, if the concentration of Ni in the metal hydroxide particles is 83 mol%, the first calcination temperature may be adjusted in a range from 830 °C to 850 °C. If the concentration of Ni in the metal hydroxide particles is 88 mol%, the first calcination temperature may be adjusted in a range from 790 °C to 810 °C. If the concentration of Ni in the metal hydroxide particles is 94 mol%, the first calcination temperature may be adjusted in a range from 740 °C to 760 °C. If the concentration of Ni in the metal hydroxide particles is 98 mol%, the first calcination temperature may be adjusted in a range from 720 °C to 740 °C.

A second mixture may be formed by mixing the preliminary lithium metal oxide particles, a second lithium source, a tungsten-containing source, and a sulfur-containing source (e.g., in an operation of S40).

In an embodiment, the tungsten-containing source may include $WO_3$, etc.

In an embodiment, the sulfur-containing source may include $(NH_4)_2SO_4$, etc.

In an embodiment, tungsten and sulfur may be derived from the same source. For example, a tungsten-sulfur containing source may be used.

In some embodiments, the tungsten-sulfur containing source may include $(NH_4)_2WS_4$. When the tungsten-sulfur containing source includes $(NH_4)_2WS_4$, W may serve as a doping element and S may serve as a passivation element. Accordingly, more W may be contained at an inside of the primary particles, and more S may be contained between the primary particles. Thus, life-span and high-temperature storage properties of the lithium secondary battery may be further improved.

A second calcination of the second mixture may be performed to form lithium metal oxide particles in which the number of moles of lithium relative to the preliminary lithium metal oxide particles (or a ratio of the number of moles of lithium to the total number of moles of metal excluding lithium) may be increased (e.g., in an operation S50).

In one embodiment, the second firing may be performed at a temperature ranging from 660 °C to 790 °C.

In some embodiments, the second calcination temperature may be adjusted according to the Ni concentration in the preliminary lithium metal oxide particles. For example, when the Ni concentration in the preliminary lithium metal oxide particles is 83 mol%, the second calcination temperature may be adjusted in a range from 760 °C to 790 °C. If the concentration of Ni in the preliminary lithium metal oxide particles is 88 mol%, the second calcination temperature may be adjusted in a range from 730 °C to 750 °C. If the concentration of Ni in the preliminary lithium metal oxide particles is 94 mol%, the second calcination temperature may be adjusted in a range from 680 °C to 700 °C. If the concentration of Ni in the preliminary lithium metal oxide particles is 98 mol%, the second calcination temperature may be adjusted in a range from 660 °C to 680 °C.

For example, when the metal hydroxide particles, the lithium source and the tungsten-containing source are mixed and calcined, the lithium source and the tungsten-containing source may react in advance to form Li-W-O. In this case, tungsten may not be sufficiently doped into the primary particles. Further, a cubic crystal structure may be formed.

However, according to the above-described embodiments, the preliminary lithium metal oxide particles may be formed, and then the tungsten-doped lithium metal oxide particles may be formed, and the formation of the cubic crystal structure may be prevented. Additionally, the primary particles may be uniformly doped with tungsten.

In an embodiment, in, e.g., the operation S40, the preliminary lithium metal oxide particles and the second lithium source may be mixed so that a ratio of the number of moles of lithium in the second lithium source relative to the total number of moles of metals excluding lithium in the preliminary lithium metal oxide particles may become N2 ($0 <$ N2 $\leq$ 0.6 and 0.9 $\leq$ N1 + N2 $\leq$ 1.2).

In some embodiments, $0.7 \leq N1 < 1$, $0.1 \leq N2 \leq 0.4$, and $0.9 \leq N1+N2 \leq 1.1$.

In some embodiments, $0.7 \leq N1 \leq 0.9$, $0.1 \leq N2 \leq 0.3$, and $0.9 \leq N1+N2 \leq 1.1$.

In some embodiments, in the operations S20 and S40, $0.75 \leq N1 \leq 0.85$, $0.15 \leq N2 \leq 0.3$, and $0.9 \leq N1+N2 \leq 1.1$.

In some embodiments, in the operations S20 and S40, $0.75 \leq N1 \leq 0.85$, $0.15 \leq N2 \leq 0.25$, and $0.9 \leq N1+N2 \leq 1.05$.

For example, the lithium metal oxide particles obtained as described above may be pulverized and classified, and then may be used as the cathode active material.

Lithium secondary battery

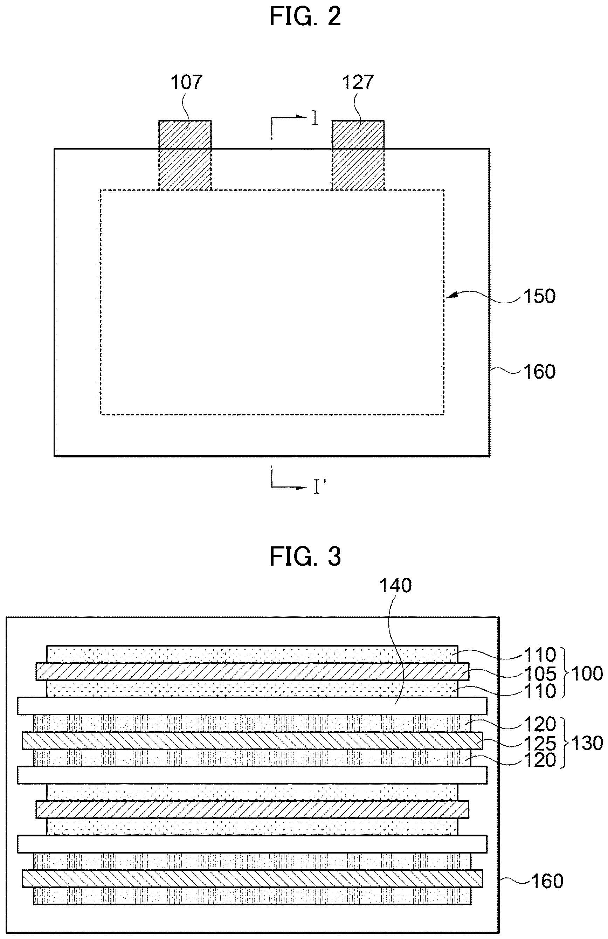

FIGS. 2 and 3 are a schematic cross-sectional view and a top planar view, respectively, illustrating a secondary battery in accordance with exemplary embodiments. For example, FIG. 3 is a cross-sectional view taken along a line I-I' of FIG. 2 in a thickness direction.

Referring to FIGS. 2 and 3, the lithium secondary battery may include a cathode 100 and an anode 130 facing the cathode 100.

The cathode 100 may include a cathode current collector 105 and a cathode active material layer 110 on the cathode current collector 105.

The cathode active material layer 110 may include a cathode active material, a cathode binder, and may further include a conductive material.

For example, a cathode slurry may be prepared by mixing and stirring the cathode active material, the cathode binder, the conductive material, a dispersive agent, etc., and then the cathode slurry may be coated on the cathode current collector 105, dried and pressed to form the cathode 100.

The cathode current collector 105 may include, e.g., stainless steel, nickel, aluminum, titanium, copper or an alloy thereof, and may include preferably aluminum or an aluminum alloy.

The cathode active material according to exemplary embodiments as described above may be used. Thus, life-span and high temperature storage properties of the lithium secondary battery may be improved.

For example, the cathode binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrenebutadiene rubber (SBR) that may be used with a thickener such as carboxymethyl cellulose (CMC).

For example, the conductive material may include a carbon-based material such as graphite, carbon black, graphene, carbon nanotube, etc., and/or a metal-based material such as tin, tin oxide, titanium oxide, a perovskite material such as $LaSrCoO_3$ or $LaSrMnO_3$, etc.

For example, the anode 130 may include an anode current collector 125 and an anode active material layer 120 on the anode current collector 125.

The anode active material layer 120 may include an anode active material, and may further include an anode binder and a conductive material.

For example, the anode active material, the anode binder and the conductive material may be mixed in a solvent to prepare an anode slurry. The anode slurry may be coated on the anode current collector 125, dried and pressed to obtain the anode 130.

The anode current collector 125 may include, e.g., gold, stainless steel, nickel, aluminum, titanium, copper or an alloy thereof, and may include, preferably, copper or a copper alloy.

The anode active material may be a material capable of intercalating and de-intercalating lithium ions. The anode active material may a lithium alloy, a carbon-based material, a silicon-based active material, etc. These may be used alone or in a combination thereof.

For example, the lithium alloy may include, e.g., a metal element such as aluminum, zinc, bismuth, cadmium, antimony, silicon, lead, tin, gallium or indium.

For example, the carbon-based material may include a crystalline carbon, an amorphous carbon, a carbon composite material, a carbon fiber, etc.

The amorphous carbon may include, e.g., hard carbon, cokes, mesocarbon microbead (MCMB), mesophase pitch-based carbon fiber (MPCF), etc. The crystalline carbon may include, e.g., natural graphite, graphitized cokes, graphitized MCMB, graphitized MPCF, etc.

In an embodiment, the anode active material may include the silicon-based active material. For example, the silicon-based material may include, e.g., Si, SiOx (0<x<2), Si/C, SiO/C or a Si-Metal. In this case, the high-capacity lithium secondary battery may be implemented.

In an embodiment, a content of silicon atoms may be in a range from 1 wt% to 30 wt%, from 1 wt% to 20 wt%, from 5 wt% to 20 wt%, or from 10 wt% to 20 wt% based on a total weight of the anode active material layer 120.

The anode binder may include a material substantially the same as or similar to that of the cathode binder. For example, the anode binder may include, e.g., an aqueous binder such as styrenebutadiene rubber, and may be used together with a thickener such as carboxymethyl cellulose (CMC).

For example, a separation layer 140 may be interposed between the cathode 100 and the anode 130.

In some embodiments, an area of the anode 130 may be greater than that of the cathode 100. Thus, lithium ions generated from the cathode 100 may be easily transferred to the anode 130 without a loss by, e.g., precipitation or sedimentation.

The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may also include a non-woven fabric formed from a glass fiber with a high melting point, a polyethylene terephthalate fiber, or the like.

An electrode cell may be formed by including the anode 100, the cathode 130 and the separator 140.

For example, a plurality of the electrode cells may be stacked to form an electrode assembly 150. For example, the electrode assembly 150 may be formed by winding, lamination or z-folding of the separation layer 140.

The lithium secondary battery may include a cathode lead 107 connected to the cathode 100 to protrude to an outside of the case 160, and an anode lead 127 connected to the anode 130 to protrude to the outside of the case 160.

For example, the cathode 100 and the cathode lead 107 may be electrically connected. The anode 130 and the cathode lead 127 may be electrically connected.

For example, the cathode lead 107 may be electrically connected to the cathode current collector 105. The anode lead 130 may be electrically connected to the anode current collector 125.

For example, the cathode current collector 105 may include a cathode tab 106 protruding at one side thereof. The cathode active material layer 110 may not be formed on the cathode tab 106. The cathode tab 106 may be integral with the cathode current collector 105 or may be connected with the cathode current collector 105 by, e.g., welding. The cathode current collector 105 and the cathode lead 107 may be electrically connected to each other via the cathode tab 106.

For example, the anode current collector 125 may include an anode tab 126 at one side thereof. The anode active material layer 120 may not be formed on the anode tab 126. The anode tab 126 may be integral with the anode current collector 125 or may be connected with the anode current collector 125 by, e.g., welding. The anode current collector 125 and the anode lead 127 may be electrically connected to each other via the anode tab 126.

For example, the electrode assembly 150 may include a plurality of cathodes and a plurality of anodes. For example, each of the cathodes may include the cathode tab. For example, each of the anodes may include an anode tab.

For example, the cathode tabs (or anode tabs) may be laminated, compressed and/or welded to form a cathode tab stack (or anode tab stack). The cathode tab stack may be electrically connected to the cathode lead 107. The anode tab stack may be electrically connected to the anode lead 127.

The electrode assembly 150 may be accommodated together with an electrolyte in the case 160 to define a lithium secondary battery.

The lithium secondary battery may be manufactured in, e.g., a cylindrical shape, a square shape, a pouch shape or a coin shape.

For example, the electrolyte may include, e.g., a lithium salt and an organic solvent optionally with an additive.

The lithium salt may be, e.g., represented as $Li^+X^-$. An anion of the lithium salt $X^-$ may include, e.g., $F^-$, $Cl^-$, $Br^-$, $I^-$, $NO_3^-$, $N(CN)_2^-$, $BF_4^-$, $ClO_4^-$, $PF6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

For example, the lithium salt may include $LiBF_4$, $LiPF_6$, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc.

For example, the additive may include a fluorine-containing carbonate-based compound, a vinylidene carbonate-based compound, a fluorine-containing lithium phosphate-based compound, a sultone-based compound, a sulfate-based compound, a borate-based compound, a nitrile-based compounds, an amine-based compound, a silane-based compound, a benzene-based compound, etc. These may be used alone or in a combination thereof.

For example, the fluorine-containing carbonate-based compound may include fluoro ethylene carbonate (FEC), etc.

For example, the vinylidene carbonate-based compound may include vinylene carbonate (VC), vinyl ethylene carbonate (VEC), etc.

For example, the fluorine-containing lithium phosphate-based compound may include lithium difluoro phosphate ($LiPO_2F_2$), lithium difluoro (bisoxalato) phosphate, etc.

For example, the sultone-based compound may include 1,3-propane sultone (PS), 1,4-butane sultone, ethensultone, 1,3-propene sultone (PRS), 1,4-butene sultone, 1-methyl-1,3-propene sultone, etc.

For example, the sulfate-based compound may include ethylene sulfate (ESA), trimethylene sulfate (TMS), methyltrimethylene sulfate (MTMS), etc.

For example, the borate-based compound may include lithium tetraphenyl borate, lithium difluoro(oxalato) borate (LiODFB), etc.

For example, the nitrile-based compound may include succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, etc.

For example, the amine-based compound may include triethanolamine, ethylene diamine, etc.

For example, the silane-based compound may include tetravinyl silane, etc.

For example, the benzene-based compound may include monofluoro benzene, difluoro benzene, trifluoro benzene, tetrafluoro benzene, etc.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

Examples and Comparative Examples

Example 1

1) Formation of metal hydroxide particle

$NiSO_4$, $CoSO_4$, and $MnSO_4$ were added to distilled water with a molar ratio of 88:9:3 to prepare a mixed solution.

The mixed solution, NaOH (precipitating agent) and $NH_4OH$ (chelating agent) were introduced into a reactor and co-precipitation was performed to prepare metal hydroxide particles ($Ni_{0.88}Co_{0.09}Mn_{0.03}(OH)_2$). The metal hydroxide particles were dried at 80°C for 12 hours, and then re-dried at 110°C for 12 hours. The metal hydroxide particles and lithium hydroxide were input into a dry high-speed mixer so that the molar ratio of (Ni+Co+Mn) and Li was 1:0.8 to form a mixture.

2) First calcination (formation of preliminary lithium metal oxide particles)

The mixture was put into a furnace and heated to 790 °C at a rate of 2 °C/min, maintained at 790 °C for 10 hours, and oxygen was continuously passed through at a flow rate of 10 mL/min to form preliminary lithium metal oxide particles.

3) Second calcination (formation of lithium metal oxide particles)

The preliminary lithium metal oxide particles, $(NH_4)_2WS_4$ and lithium hydroxide were introduced into a dry mixer to form a mixture.

Lithium hydroxide was added so that the molar ratio of (Ni+Co+Mn) and Li (excluding Li in the preliminary lithium metal oxide particles) was 1:0.21. $(NH_4)_2WS_4$ was added in an amount of 0.01 parts by weight based on 100 parts by weight of the preliminary lithium metal oxide particles.

The mixture was put into a furnace and heated to 730°C at a rate of 2°C/min, and maintained at 730°C for 10 hours. During the calcination, oxygen was continuously passed through the furnace at a flow rate of 10 mL/min.

After the calcination, the fired product was cooled to room temperature, pulverized and classified to obtain lithium metal oxide particles having a secondary particle shape in which primary particles were agglomerated.

Example 2

The metal hydroxide particles of Example 1, lithium hydroxide, WO$_3$ and (NH$_4$)$_2$SO$_4$ of Example 1 were introduced into a dry high-speed mixer to form a mixture.

Lithium hydroxide was added so that a molar ratio of (Ni+Co+Mn) and Li was 1:1.01. WO$_3$ and (NH$_4$)$_2$SO$_4$ were added by 0.006 parts by weight and 0.004 parts by weight, respectively, based on 100 parts by weight of the metal hydroxide particles.

The mixture was put into a furnace and heated to 730 °C at a rate of 2°C/min, and maintained at 730°C for 10 hours. During the calcination, oxygen was continuously passed through the furnace at a flow rate of 10 mL/min.

After the calcination, the fired product was cooled to room temperature and then pulverized and classified to obtain lithium metal oxide particles.

Comparative Example 1

Lithium metal oxide particles were obtained by the same method as that in Example 2, except that (NH$_4$)$_2$SO$_4$ was not added (i.e., only WO$_3$ was added).

Comparative Example 2

Lithium metal oxide particles were obtained by the same method as that in Example 1, except that WO$_3$ was added instead of (NH$_4$)$_2$WS$_4$.

Comparative Example 3

The lithium metal oxide particles of Comparative Example 1 and (NH$_4$)$_2$SO$_4$ were put into a dry high-speed mixer and mixed for 5 minutes to prepare a mixture. (NH$_4$)$_2$SO$_4$ was mixed in an amount of 0.004 parts by weight based on 100 parts by weight of the lithium metal oxide particles.

The mixture was put into a furnace, heated to 730 °C at 2°C/min, and maintained at 730 °C for 10 hours. During the calcination, oxygen was continuously passed through the furnace at a flow rate of 10 mL/min.

After the calcination, the fired product was cooled to room temperature, pulverized and classified to obtain S-coated lithium metal oxide particles.

Comparative Example 4

The metal hydroxide particles of Example 1 and lithium hydroxide were introduced into a dry high-speed mixer to form a mixture. Lithium hydroxide was added so that a molar ratio of (Ni+Co+Mn) and Li was 1:1.01.

The mixture was put into a furnace, heated to 790 °C at 2°C/min, and maintained at 790 °C for 10 hours. During the calcination, oxygen was continuously passed through the furnace at a flow rate of 10 mL/min.

After the calcination, the fired product was cooled to room temperature, pulverized and classified to form lithium metal oxide particles.

A mixture was prepared by introducing the lithium metal oxide particles, WO$_3$ and (NH$_4$)$_2$SO$_4$ into a dry high-speed mixer. WO$_3$ and (NH$_4$)$_2$SO$_4$ were added by 0.006 parts by weight and 0.004 parts by weight, respectively, based on 100 parts by weight of the metal hydroxide particles.

The mixture was put into a furnace, heated to 730 °C at 2°C/min, and maintained at 730 °C for 10 hours. During the calcination, oxygen was continuously passed through the calcination furnace at a flow rate of 10 mL/min.

After the calcination, the fired product was cooled to room temperature, pulverized and classified to obtain lithium metal oxide particles coated with W and S.

Experimental Example 1: EDS analysis of lithium metal oxide particles

(1) Qualitative analysis of primary particles located in an inner region of secondary particle

A cross-sections of lithium metal oxide particles (secondary particles) of Examples and Comparative Examples were analyzed with a Scanning Electron Microscope (SEM) and Energy-Dispersive X-ray Spectroscopy (EDS).

When a radius of the lithium metal oxide particle is defined as Rs (however, in Comparative Examples 3 and 4, the radius means a value excluding a thickness of the coating layer on the surface of the lithium metal oxide particle), regions corresponding to an inside of primary particles and between the primary particles at a point of 0.5 Rs in a radial direction from a center of the particle were analyzed by EDS.

Presence of W at the inside of the primary particles was detected

o: W detected

×: W not detected

Presence of S between the primary particles was detected

o: S detected
×: S not detected

Experimental Example 2: Internal crystal structure analysis on primary particle

Cross-sections of the lithium metal oxide particles of Examples and Comparative Examples 1 to 3 were analyzed by a high-resolution transmission electron microscopy (HR-TEM).
When the radius of the lithium metal oxide particle is defined as Rs, primary particles located at a point of 0.5Rs in a radial direction from a center of the particle were analyzed.
When the radius of the primary particle was defined as Rp, presence of a cubic crystal structure was detected at a point 0.9Rp in the radial direction from the center of the primary particle.

o: Cubic crystal structure detected

×: No cubic crystal structure detected

[Table 1]

| | presence of S at interface between primary particles at 0.5Rs | presence of W at inside of primary particles at 0.5Rs | presence of cubic crystal structure at 0.9Rp | Note |
|---|---|---|---|---|
| Example 1 | ○ | ○ | × | multi-step calcination, adding $(NH_4)_2WS_4$ in the formation of lithium metal oxide particles |
| Example 2 | ○ | ○ | ○ | one-step calcination, adding $WO_3$ and $(NH_4)_2SO_4$ in the formation of lithium metal oxide particles |
| Comparative Example 1 | - | ○ | ○ | one-step calcination, adding $WO_3$ in the formation of lithium metal oxide particles |
| Comparative Example 2 | - | ○ | × | multi-step calcination, adding $WO_3$ in the formation of lithium metal oxide particles |
| Comparative Example 3 | × | ○ | ○ | one-step calcination, adding $WO_3$ in the formation of lithium metal oxide particles, S coating after the formation of lithium metal oxide particles |
| Comparative Example 4 | × | × | - | W and S coating after the formation of lithium metal oxide particles |

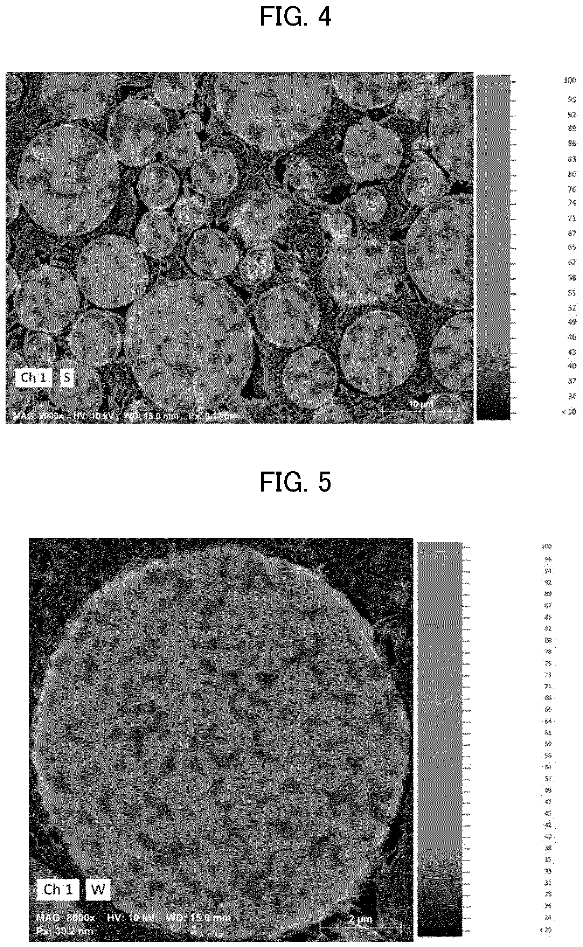

In Example 1, S was detected in the inner region of the lithium metal oxide particle (for example, between the primary particles located at the point of 0.5Rs from the center of the particle). Referring to FIG. 4, S was distributed over the entire inner region of the lithium metal oxide particle of Example 1.
In Comparative Examples 3 and 4, the lithium metal oxide particles were formed in advance, and then S (or S and W) was coated on the surface of the lithium metal oxide particles. S was not detected in the inner regions of the lithium metal oxide particles of Comparative Examples 3 and 4.
In the lithium metal oxide particles of Example 1, W was detected in the inner region of the lithium metal oxide particles (e.g., at the inside of the primary particles located at the point of 0.5Rs from the center of the particle in the radial direction). Referring to FIG. 5, W was distributed over the entire inner region of the lithium metal oxide particle of Example 1.

In Comparative Example 4, the lithium metal oxide particles were formed in advance, and then W and S were coated on the surface of the lithium metal oxide particles. W was not detected in the inner region of the lithium metal oxide particles of Comparative Example 4.

In Example 1, the preliminary lithium metal oxide particles (a molar ratio of lithium to all metals except lithium is less than 1) were formed in advance, and then the preliminary lithium metal oxide particles were doped with W. In the lithium metal oxide particles of Example 1, the cubic crystal structure was not detected at the inside of the primary particles.

In the lithium metal oxide particles of Example 2 and Comparative Examples 1 and 3, the cubic crystal structure was detected at the inside of the primary particles.

Experimental Example 3: Quantitative analysis of W and S inside primary particles and between primary particles

A cross-section of the lithium metal oxide particles of Example 1 was analyzed using a Transmission Electron Microscope (TEM) and EDS.

When a radius of the lithium metal oxide particle is defined as Rs, primary particles located at a point 0.5Rs in a radial direction from the center of the lithium metal oxide particle were analyzed.

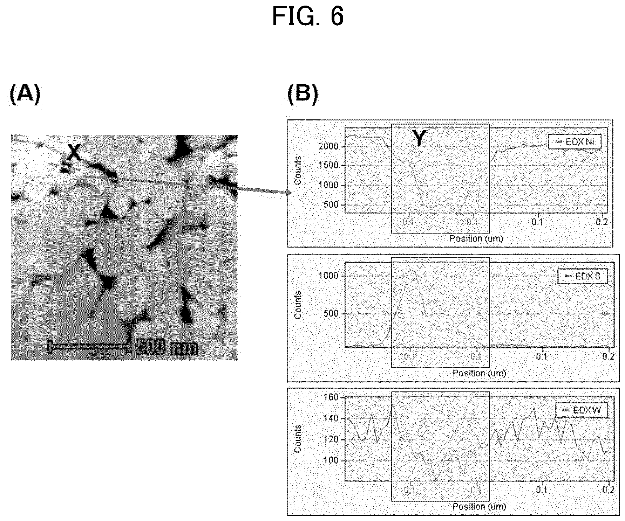

Line-scanning analysis (spot size 5) was performed along a line passing through a primary particle and a neighboring primary particle (line X in FIG. 6(A)).

Referring to (B) of FIG. 6, a detection count of W was greater at an inside of the primary particles than a detection count between the primary particles (region Y in (B) of FIG. 6). A detection count of S was greater between the primary particles (region Y in (B) of FIG. 6) than a detection count at the inside of the primary particles.

From the above results, it is confirmed that W was distributed more at the inside of the primary particles and more S was distributed more between the primary particles in the lithium metal oxide particles of Example 1.

Accordingly, in the lithium metal oxide particles of Example 1, a crystalline structure of the primary particles may be more stabilized and elution of W may be effectively prevented.

Experimental Example 4: Quantitative analysis of W inside primary particles

The lithium metal oxide particles of Example 1 were additionally sampled, and a cross-section of the lithium metal oxide particles of Example 1 was analyzed by Transmission Electron Microscope (TEM) and EDS.

When a radius of the lithium metal oxide particle is defined as Rs, primary particles located at a point 0.5Rs in a radial direction from the center of the lithium metal oxide particle were analyzed.

An EDS line-scanning analysis was performed for the cross-section of the primary particle along the radius from the center to the surface of the primary particle.

[Table 2]

| Position | counts |
|---|---|
| 1(central portion) | 4.80E+01 |
| 2 | 3.20E+01 |
| 3 | 3.50E+01 |
| 4 | 3.40E+01 |
| 5 | 3.90E+01 |
| 6 | 3.90E+01 |
| 7 | 3.70E+01 |
| 8 | 4.70E+01 |
| 9(surface portion) | 4.60E+01 |
| average (Cavg) | 3.97E+01 |
| Min (Cmin) | 3.20E+01 |
| Max (Cmax) | 4.80E+01 |

Referring to Table 2, it is confirmed that W was uniformly distributed at the inside of the primary particles of the lithium metal oxide particles of Example 1.

Accordingly, the crystal structure of the primary particle of the lithium metal oxide particle of Example 1 may become more stabilized.

Experimental Example 5: Evaluation on performance of lithium secondary battery

1) Fabrication of lithium secondary battery

Lithium metal oxide particles of Examples and Comparative Examples, carbon black and polyvinylidene fluoride were dispersed in N-methyl-2-pyrrolidone (NMP) by a weight ratio of 92:5:3 to prepare a cathode slurry.

The cathode slurry was coated on an aluminum foil (thickness of 15 $\mu$m), dried and pressed to prepare a cathode. A lithium metal was used as a counter electrode (an anode).

The cathode and the anode were each notched in a circular shape, and a circular polyethylene separator (thickness of 13 $\mu$m) was interposed between the cathode and the anode to prepare an electrode assembly.

The electrode assembly was placed in a coin-shaped casing, and an electrolyte was injected to form a coin-type lithium secondary battery. A 1M $LiPF_6$ solution using a mixed solvent of EC/EMC (30:70 v/v) was used as the electrolyte.

2) Evaluation on life-span properties at room temperature (capacity retention after repeated charging and discharging)

The lithium secondary batteries of Examples and Comparative Examples were subjected to CC/CV charging (0.1C 4.3V, 0.05C CUT-OFF) and CC discharging (0.1C 3.0V CUT-OFF) three times at 25 °C. A discharge capacity C1 at the 3rd cycle was measured.

The lithium secondary batteries of Examples and Comparative Examples were subjected to CC/CV charging (0.5C 4.3V, 0.05C CUT-OFF) and CC discharging (1C 3.0V CUT-OFF) 300 times at 25 °C. A discharge capacity C2 at the 300th cycle was measured.

A capacity retention was calculated as follows.

$$\text{Capacity retention} (\%) = C2/C1 \times 100\ (\%)$$

3) Evaluation on high-temperature storage property (capacity retention after high-temperature storage)

The lithium secondary batteries of Examples and Comparative Examples were subjected to CC/CV charging (0.1C 4.3V, 0.05C CUT-OFF) and CC discharging (0.1C 3.0V CUT-OFF) twice at 25 °C, and CC/CV charged (0.1C 4.3V, 0.05C CUT-OFF).

The charged lithium secondary batteries of Examples and Comparative Examples were stored at 60 °C for 3 weeks, and then additionally left at room temperature for 30 minutes, and CC discharge (0.5C 3.0V CUT-OFF) was performed to measure a discharge capacity C3.

A capacity retention after high temperature storage was calculated as follows.

$$\text{Capacity retention after high temperature storage} (\%) = C3/C1 \times 100\ (\%)$$

[Table 3]

| | capacity retention after room temperature cycle (%) | capacity retention after high temperature storage (%) |
|---|---|---|
| Example 1 | 80 | 91 |
| Example 2 | 74 | 82 |
| Comparative Example 1 | 52 | 67 |

(continued)

|  | capacity retention after room temperature cycle (%) | capacity retention after high temperature storage (%) |
|---|---|---|
| Comparative Example 2 | 69 | 75 |
| Comparative Example 3 | 56 | 63 |
| Comparative Example 4 | 63 | 70 |

Referring to Table 2, the lithium secondary batteries of Examples provided the improved capacity retentions at room temperature cycle and high temperature storage compared to those from the lithium secondary batteries of Comparative Examples.

## Claims

1. A cathode active material for a lithium secondary battery, comprising a lithium metal oxide particle that contains tungsten and has a secondary shape in which a plurality of primary particles are aggregated,
wherein the lithium metal oxide particle includes a sulfur-containing portion formed between the primary particles in an inner region of the lithium metal oxide particle.

2. The cathode active material for a lithium secondary battery of claim 1, wherein the lithium metal oxide particle contains nickel, and tungsten is doped into the primary particles.

3. The cathode active material for a lithium secondary battery of any one of claims 1 and 2, wherein a content of nickel in the lithium metal oxide particle is 80 mol% or more based on all elements except lithium and oxygen.

4. The cathode active material for a lithium secondary battery of any one of claims 1 to 3, wherein an amount of sulfur included in the sulfur-containing portion is greater than an amount of sulfur included in the primary particles.

5. The cathode active material for a lithium secondary battery of any one of claims 1 to 4, wherein an amount of tungsten included in the primary particles is greater than an amount of tungsten included in the sulfur-containing portion.

6. The cathode active material for a lithium secondary battery of any one of claims 1 to 5, wherein, in an energy dispersive X-ray spectroscopy (EDS) analysis of a cross-section of the lithium metal oxide particle, a difference between a maximum detection count of tungsten and an average detection count of tungsten is 45% or less of the average detection count, and
a difference between a minimum detection count of tungsten and the average detection count of tungsten is 45% or less of the average detection count.

7. The cathode active material for a lithium secondary battery of any one of claims 1 to 6, wherein the primary particles include a layered crystal structure, and
when a radius of the primary particle is designated as Rp, the primary particle does not include a cubic crystal structure in a region within a radius of 0.9Rp from a center of the primary particle.

8. The cathode active material for a lithium secondary battery of any one claims 1 to 7, wherein, when a radius of the lithium metal oxide particle is designated as Rs, the sulfur-containing portion is present in a region within a radius of 0.6Rs from a center of the lithium metal oxide particle.

9. The cathode active material for a lithium secondary battery of claims 1 to 7, wherein, when a radius of the lithium metal oxide particle is designated as Rs, tungsten is present in a region within a radius of 0.6Rs from a center of the lithium metal oxide particle.

10. A method of preparing a cathode active material for a lithium secondary battery, comprising:

preparing metal hydroxide particles;
forming a mixture of the metal hydroxide particles, a lithium source, a tungsten-containing source and a sulfur-containing source; and
performing a calcination of the mixture.

11. The method of claim 10, wherein $(NH_4)_2WS_4$ is used as the tungsten-containing source and the sulfur-containing source.

12. The method of any of claims 10 and 11, wherein forming the mixture comprises forming a first mixture by mixing the metal hydroxide particles and a first lithium source so that a ratio of the number of moles of lithium in the first lithium source relative to the total number of moles of metals in the metal hydroxide particles becomes N1, and $0.6 \leq N1 < 1$,
wherein performing the calcination comprises performing a first calcination of the first mixture to form preliminary lithium metal oxide particles.

13. The method of claim 12, wherein forming the mixture further comprises mixing the preliminary lithium metal oxide particles, a second lithium source, the tungsten-containing source and the sulfur-containing source to form a second mixture,
wherein performing the calcination further comprises performing a second calcination of the second mixture to form lithium metal oxide particles having an increased number of moles of lithium compared to that of the preliminary lithium metal oxide particles.

14. The method of claim 13, wherein forming the second mixture comprises mixing the preliminary lithium metal oxide particles and the second lithium source so that a ratio of the number of moles of lithium in the second lithium source relative to the total number of moles of metals excluding lithium in the preliminary lithium metal oxide particles becomes N2, and
$0 < N2 \leq 0.6$ and $0.9 \leq N1 + N2 \leq 1.2$.

15. A lithium secondary battery, comprising:

a cathode comprising the cathode active material for a lithium secondary battery according to any one of claims 1 to 9; and
an anode facing the cathode.

# FIG. 1

| PREPARING METAL HYDROXIDE PARTICLES | S10 |

⇩

| MIXING THE METAL HYDROXIDE PARTICLES AND A FIRST LITHIUM SOURCE TO FORM A FIRST MIXTURE | S20 |

⇩

| PERFORMING A FIRST CALCINATION OF THE FIRST MIXTURE TO FORM PRELIMINARY LITHIUM METAL OXIDE PARTICLES | S30 |

⇩

| MIXING THE PRELIMINARY LITHIUM METAL OXIDE PARTICLES, A SECOND LITHIUM SOURCE, A TUNGSTEN-CONTAINING SOURCE AND A SULFUR-CONTAINING SOURCE TO FORM A SECOND MIXTURE | S40 |

⇩

| PERFORMING A SECOND CALCINATION OF THE SECOND MIXTURE TO FORM LITHIUM METAL OXIDE PARTICLES | S50 |

# FIG. 2

107            127

I

150

160

I'

# FIG. 3

140

110 ⎫
105 ⎬ 100
110 ⎭

120 ⎫
125 ⎬ 130
120 ⎭

160

# FIG. 4

# FIG. 5

FIG. 6

(A)

(B)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100821523